# EUROPEAN PATENT SPECIFICATION

(11) **EP 3 066 316 B1**
(45) Date of publication and mention of the grant of the patent: **22.07.2020**
(21) Application number: 13896919.1
(22) Date of filing: 07.11.2013
(51) Int. Cl.: F02C 3/00, F23G 5/00, F23G 7/06, F23G 5/12, F26B 23/02

(54) **A TREATMENT SYSTEM FOR GENERATING ELECTRICITY BY COMBUSTING BIOFUEL AND A METHOD OF OPERATING THE SAME**
EIN BEHANDLUNGSSYSTEM ZUR ENERGIEGEWINNUNG DURCH VERBRENNUNG VON BIOBRENNSTOFF UND EIN VERFAHREN ZUR VERWENDUNG DES SYSTEMS
SYSTÈME DE TRAITEMENT POUR PRODUIRE DE L'ÉLECTRICITÉ PAR LA COMBUSTION DE BIOCARBURANT ET PROCÉDÉ POUR SA MISE EN OEUVRE

(43) Date of publication of application: 14.09.2016
(73) Proprietor: Gate 5 Energy Partners, Inc., Irvine, CA 92617 (US)
(72) Inventor: DELSON, Steven, Laguna Hills, CA 92653 (US); DEES, Lawrence E. Jr., Rancho Cordova, CA 95670 (US)
(74) Representative: Zacco Sweden AB
(86) International application number: PCT/US2013/068882
(87) International publication number: WO 2015/069250

(56) References cited:
- EP-A1- 0 508 546
- WO-A1-90/12249
- AT-B- 413 602
- DE-A1- 10 311 847
- US-A- 4 414 813
- US-A- 5 215 670
- US-A1- 2013 019 529
- US-B2- 7 272 934
- US-B2- 7 272 934

## Description

### BACKGROUND

### 1. Field

This application relates generally to processing of waste into energy, specifically the production of electrical and thermal energy from semi-solid waste materials containing organic solids and, more specifically, to processing municipal sewage sludge, agricultural and food waste, as well as other natural waste materials (hereinafter referred to as "sludge") into energy.

### 2. Related Art

Sludge management and production of energy without consuming fossil fuel are world-wide issues that can pose significant economic, health, and environmental challenges. Sludge is typically disposed of on land; the degree to which it must be stabilized before this land disposal varies significantly by jurisdiction. Sludge is known to contain harmful pathogens and bacteria, and naturally decomposes into methane-containing gasses and compounds containing nitrates and phosphorus; sludge can be both an environmental and public health problem. Sludge can, however, be viewed as a resource instead of waste because it contains significant latent energy. This latent energy is also referred to as "calorific value" and is measured in BTUs (British Thermal Units). An emerging practice at wastewater treatment plants is to utilize a portion of the energy in sludge by capturing and burning portions of the methane-containing gasses that are a byproduct of anaerobic digestion (leaving the remnant, digested sludge, to be managed offsite). As much as 50 percent of the calorific value in sludge can be released through anaerobic digestion. Many systems and processes have been developed to safely and economically manage the sludge that remains at the end of the wastewater treatment process. In general, systems and processes are designed to remove moisture from the sludge before it is released into the environment. The moisture removed from the sludge (referred to herein as "wastewater") is generally returned to the headworks of the wastewater treatment plant for processing. For the most part the energy in the sludge that remains at the end of the treatment process is an unused resource.

Sludge, regardless of its origin, can be categorized based on the treatment that it has undergone. For example, sludge that has not yet been stabilized through decomposition by anaerobic bacteria is referred to as "undigested sludge," while sludge that has been decomposed by anaerobic bacteria is referred to as "digested sludge." Typically, undigested municipal sewage sludge and raw/fresh animal or food stock waste has a relatively high calorific value, while digested municipal sewage sludge and aged animal or food stock waste typically have lower calorific value in comparison.

A number of methods have been developed for transforming the latent energy in sludge into usable energy; some of the methods are combustion, gasification, pyrolysis, and thermal hydration. These methods, historically, reduce rather than eliminate the amount of sludge that requires land disposal and will not generate the thermal or electrical energy needed for the process to run without gird electricity and/or fossil fuel. Documents AT413602 B, DE10311847 A1 and US7272934 B2 disclose treatment systems wherein sludge is dried by a dryer in conjunction with a boiler or furnace.

Thus, systems and processes for the elimination of sludge that can also generate an adequate amount of electrical and thermal energy to sustain the process are desired.

### SUMMARY

The object of the invention is solved by a treatment system according to claim 1 and a method according to claim 8.

In one exemplary embodiment, portions of heat from the system boiler may be conveyed to the turbine generator system instead of the Dryer. A third primary heat exchanger may convey heat from the system boiler to the turbine generator system and power may be generated for running the system and for other uses.

The system boiler includes a burner operable to burn a mixture of ambient or preheated air and at least a portion of the biofuel as fuel. This burner may be further operable to burn an oil or gas, separately or in combination with biofuel.

In some examples, the first condenser may be operable to receive water or oil at a first temperature, the water or oil to be used to reduce the temperature of the at least partially saturated drying gas, wherein the first condenser may be further operable to output the water or oil at a second temperature that is higher than the first temperature. The water or oil at the second temperature can be used for power or combined heat and power ("CHP") generation or other purposes. In some examples, the system may include a storage tank operable to store the water or oil after being used for power or CHP generation or other purposes, wherein the first condenser is coupled to receive water or oil from the storage tank, although this water or oil may come from any source and be used for any purpose or no purpose.

In some examples, the system boiler's exhaust system includes a second separator operable to separate at least a portion of ash byproduct of the combustion of the biofuel in the system boiler, wherein the second separator is further operable to discharge this ash from the system. The exhaust system may further include a second condenser operable to reduce a moisture content of the combusted air from the system boiler to form a reduced temperature combusted gas. The exhaust system may further include another fan operable to discharge the reduced temperature combusted gas to the system pollution control equipment and ultimately to the atmosphere.

In other exemplary embodiments, processes and computer-readable storage mediums are provided for processing sludge using the systems described above.

### BRIEF DESCRIPTION OF THE FIGURES

**Figure 1** illustrates a block diagram of an exemplary system for transforming sludge into energy.
**Figure 2** illustrates a block diagram of another exemplary system for transforming sludge into energy.
**Figure 3** illustrates a block diagram of another exemplary system for transforming sludge into energy.
**Figure 4** illustrates an exemplary process block diagram.
**Figure 5** illustrates an exemplary computing system that may be used to control a sludge treatment system.

### DETAILED DESCRIPTION

The following description is presented to enable a person of ordinary skill in the art to make and use the various embodiments. Descriptions of specific devices, techniques, and applications are provided only as examples.

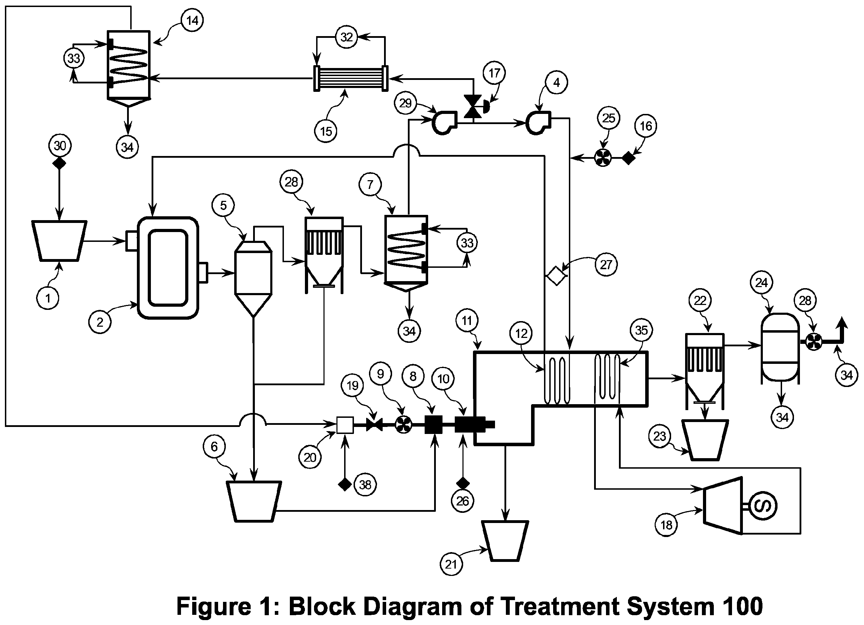

**Figure 1** illustrates a block diagram of an exemplary treatment system **100.** As an overview, treatment system **100** may be used to produce power from sludge by converting sludge **30** into biofuel that is combusted to produce heat used in the system for the production of both biofuel and power. In treatment system **100** the drying gas receives its heat from air-air boiler heat exchanger **12** within boiler **11.**

Treatment system **100** may include a storage unit 1 for holding sludge **30** brought into the system. In some examples, storage unit 1 may be used to store sludge that has been dewatered to have approximate 40 to 85 percent moisture content at ambient temperature (i.e. "dewatered sludge"). However, it should be appreciated that sludge having other content ratios may be used. Storage unit **1** may include any type of standard storage system suitable for storing sludge. The volume of storage unit **1** may depend on the location of treatment system **100** and the sludge source. For instance, if treatment system **100** is situated at a municipal wastewater treatment plant or large-scale agricultural or food processing operation with an adequate continuous supply of sludge and onsite dewatering, storage unit **1** may be used only as a surge bin having a two to three hour sludge capacity. If, however, the treatment system **100** is at a facility where the supply of sludge is not consistently available for efficient operation of the system on a continuous basis, be it at a treatment plant, food processing facility, hog farm, cattle ranch, farm, or dairy with sludge being trucked in from other sites, storage unit **1** may have a volume allowing storage of a 24-hour or more running capacity of dewatered sludge. However, it should be appreciated that, irrespective of the examples cited, a storage unit 1 having any desired capacity may be used.

Treatment system **100** includes a dryer that includes a grinder, and/or mill (or combination thereof), hereinafter referred to as a Dryer **2** in which the moisture may be reduced or removed from the sludge that has been dewatered (either at the treatment site or offsite dewatering equipment of any sort may be included in the system in advance of the storage unit **1**). The Dryer **2** may also be used to process the dewatered sludge to a uniform, or at least substantially uniform, size (becoming biofuel after drying and processing). The Dryer **2** may be of any design that is able to pulverize the dewatered sludge into a fine powder, e.g., 80% of which would be smaller than 80 microns and can pass through a #200-sieve screen, and with a moisture content of less than about 30 percent. In some examples, Dryer **2** may be of a size operable to process on the order of 60 wet tons of dewatered sludge (40%-85% moisture) over a 24-hour period by drying and milling or grinding the dewatered sludge as described above. However, Dryer **2** may be of any greater or lesser capacity (size) and the system may reduce the moisture of the sludge to any amount.

It should be appreciated that the operating temperature of the high-temperature gas at Dryer **2** may vary depending on the specific sludge application. Increasing the temperature of drying gas stream in Dryer **2** enables increased moisture pickup per unit weight of sludge. As a result, the throughput of Dryer **2** for dewatered sludge of any particular moisture content may be increased in proportion to heat input to the Dryer **2.** In one example, the drying gas stream coming to the Dryer **2** is received at a temperature between 315 °C (600°F) and and 815 °C (1,500°F). In this example, the source of heat for drying gas stream coming to Dryer **2** is an air-air boiler heat exchanger unit **12** within system boiler **11.** As will be described in greater detail below, mixer **27** may divert a portion of the portion of the now cleaned drying gas stream not drawn through diverter valve **17** into the drying gas stream exiting air-air boiler heat exchanger **12** in order to produce the drying gas stream of the desired temperature for Dryer **2.** Due to the evaporative cooling that occurs within Dryer **2,** the temperature of the drying gas stream entering Dryer **2** will be reduced before exiting Dryer **2.** The drying gas stream entering Dryer 2 absorbs moisture from the sludge and exits as an at least partially saturated drying gas stream.

The sludge **30** may be transferred from storage unit **1** to Dryer **2** using any means that is capable of delivering an accurate, modulated supply of sludge to the Dryer 2. For example, an auger capable of delivering previously dewatered, but otherwise wet, sludge may be used to supply Dryer **2.**

Treatment system **100** includes gas-solids separator **5** for separating particulate from the at least partially saturated drying gas stream exiting from Dryer **2.** Gas-solids separator **5** may be configured to remove the biofuel from the at least partially saturated drying gas stream carrying the sludge moisture from Dryer **2.** In some examples, the temperature of the mixture of biofuel and at least partially saturated drying gas stream from Dryer **2** may be at approximately 148°C (300°F). However, it should be appreciated that this temperature can vary depending on the system application or design. Gas-solids separator **5** may be configured to separate the biofuel from the at least partially saturated drying gas stream and deposit the biofuel in a biofuel bin **6.** In some examples, gas-solids separator **5** may be made from a material capable of withstanding high gas temperatures and corrosive materials, such as stainless steel or other appropriate materials, and may be operable to remove at portion of the biofuel from the at least partially saturated drying gas stream. Separator may also include a fabric-type gas-solids separator (baghouse) **28** to separate the remaining solids from the at least partially saturated drying gas stream.

In some examples, gas-solids separator **5** may be a cellular-type separator. In these examples, the inlet to each individual cell may be fitted with a multiple blade spinner arranged to spin the at least partially saturated drying gas stream and convey the particles to the outlet of the cell. The particles may, for example, be deposited into biofuel bin **6** via a rotary valve or any other means (not shown). The at least partially saturated drying gas stream is at least partially cleaned by separator 5 and fabric-type gas-solids separator 28 and enters condensing-type scrubber **7** as partially cleaned at least partially saturated drying gas stream. The partially cleaned at least partially saturated drying gas stream passes through condensing-type scrubber 7 where its moisture content is reduced and exits as a cleaned drying gas stream.

As mentioned above, once separated from the at least partially saturated drying gas stream, the biofuel may be sent to biofuel bin **6.** Additionally, as described in greater detail below, in some examples, biofuel bin **6** may include an auger that meters the biofuel into a mix box **8** where it is combined with ambient and/or preheated air and then used by dual fuel burner **10** and combusted in the system boiler **11.** It should be appreciated that any delivery rate or biofuel to air mixture may be used depending on the objectives of the system. In some examples, biofuel bin **6** may include a safety system to prevent dust explosions. The safety system for biofuel bin **6** may reduce the possibility of dust explosions by, for example, injecting an inert gas, such as nitrogen or carbon dioxide, into biofuel bin **6.**

Treatment system **100** may further incorporate a bottom ash collection system in system boiler **11.** The bottom ash collection feature may further gravity feed a separate or integral ash storage bin **21.**

Treatment system **100** further includes a process fan **29** to draw a vacuum to pull the at least partially saturated drying gas stream through gas-solids separators **5** and **28,** and condensing-type scrubber **7** and to diverter valve **17** in order to divert a portion of the now cleaned drying gas stream from the drying gas loop through gas-water heat exchanger **15.** Heat exchanger **15** cools the diverted portion of cleaned drying gas stream using process water from an ambient-temperature water source **32** and condenses out a volume of moisture equal to the moisture contained in sludge **30** from the diverted portion of cleaned drying gas stream via condenser **14.** Prior to reaching condenser **14,** heat drawn from the diverted portion of the cleaned drying gas stream by gas-water heat exchanger **15** may be used as the source of heat for heating the plant digesters or other Combined Heat and Power (CHP) out-of-system uses **32** (not shown) or for no use. In some examples, process fan **29** and diverter valve **17** may be made from temperature and corrosion-tolerant materials, such as stainless steel or other appropriate materials. Diverter valve **17** functions to keep an overall moisture balance in the drying gas loop by diverting a portion of cleaned drying gas stream carrying a volume of moisture equal to that absorbed from the sludge less the volume of moisture removed by condensing-type scrubber **7.**

Treatment system 100 further includes a make-up air supply **16** to replace the amount of the cleaned drying gas stream diverted from the drying gas loop by diverter valve **17.** It should be appreciated that make-up air supply **16** may be ambient temperature or preheated. Make-up air supply **16** may include air supply fan **25.** It should be appreciated that make-up air supply **16** can be located before or after process-air circulation fan **4.**

As mentioned above, treatment system **100** further includes a condenser **14** for condensing moisture from the diverted portion of cleaned drying gas stream. In some examples, this diverted portion of cleaned drying gas stream may be at a temperature above its dew point. The shell of condenser **14** may be made from a high-temperature and corrosion-tolerant material, such as stainless steel or other appropriate materials. Heat in the diverted portion of the cleaned drying gas stream will be transferred through heat exchanger **15** to process water circulated through heat exchanged **15** using a re-circulating water system (not shown) that will convey the heat to out-of-system uses. The diverted portion of cleaned drying gas stream passing through heat exchanger **15** will be conveyed to condenser **14** that will then, utilizing process water from an ambient-temperature water source **33,** reduce the temperature of the diverted portion of the cleaned drying gas stream to below its dew point. The moisture in the diverted portion of cleaned drying gas stream may be recovered by lowering the temperature of this gas stream to below its dew point by, for example, using the process water from an ambient-temperature source, thereby causing the moisture to condense out of the diverted portion of cleaned drying gas stream. As the moisture condenses into water, it may collect carry-over particulate remaining in the gas stream and carry the particulate as sludge condensate **34** which is to be removed from the system and conveyed to the treatment plant or other out-of-system treatment (not shown). A reduced-temperature diverted portion of cleaned drying gas stream exits condenser **14** and is conveyed to primary air supply inlet **20** at system boiler **11** where it will be serve as a portion of the combustion air utilized with the biofuel from biofuel bin **6** and combusted utilizing duel fuel burner **10.** Additionally, after the aforementioned process water used to cool the diverted portion of cleaned drying gas stream into condensate, as described above, is warmed and may be either returned to ambient-temperature water source **33,** or used for any purpose when it exits condenser **14.**

Treatment system **100** may further include process-air circulation fan **4** for drawing the portion of cleaned drying gas stream from condensing-type scrubber **7** that was not diverted by diverter valve **17** and circulating it to the air-air boiler heat exchanger unit **12** within system boiler **11.** In some examples, process-air circulation fan **4** may be made from temperature and corrosion-tolerant materials, such as stainless steel or other appropriate materials, and may circulate 100 percent of the weight of gas that passes through treatment system **100.** Process-air circulation fan **4** may include a speed control that may be adjusted based on the characteristics of the sludge fed to Dryer **2.** While shown at the output of condensing-type scrubber **7,** it should be appreciated that process-air circulating fan **4** may be combined with process fan **29** or located at the output of any of Dryer **2,** gas-solids separators **5** and **28,** or condensing-type scrubber **7.**

Treatment system 100 may further include mixer **39** that may divert a portion of the portion of the now cleaned drying gas stream not drawn through diverter valve **17** into the drying gas stream exiting air-air boiler heat exchanger **12** in order to produce a drying gas stream of the desired temperature for Dryer **2.** In some examples, mixer **39** may be made from temperature and corrosion-tolerant materials, such as stainless steel or other appropriate materials, and may divert up to 100 percent of the weight of gas that passes through treatment system **100.**

As mentioned above, dual fuel burner **10** will be used to produce heat for Dryer **2** operation and/or to produce steam for the steam system/turbine **18.** The dual fuel burner **10** may utilize any single or a combination of multiple fuels. The primary source may be biofuel supplied from biofuel bin **6.** The secondary source may be a supplementary fuel **26,** such as gas (e.g., digester gas, natural gas, propane, and the like) or oil. The flow rate of fuel supplied to dual fuel burner **10** may be controlled as desirable for sludge drying in Dryer **2** and/or to produce power from the steam system/turbine **18.** Additionally, the dual fuel burner **10** may be able to supply up to 100% of the heat required using either biofuel or supplementary fuel **26** alone. In some examples, dual fuel burner **10** may include separate ignition systems (not shown), which may be fired by biofuel, oil, or gas. In some examples, the separate ignition burner may be used to maintain the system temperature in a stand-by mode during times when sludge is not being processed or power production is not desired.

The steam to power steam system/turbine **18** circulates through turbine air-water heat exchanger **35** located with system boiler **11** where heat is transferred from the combustion of biofuel to the steam. The heat available to produce steam for the steam system/turbine **18** is heat remaining after sufficient heat is conveyed to the drying gas stream via air-air boiler heat exchanger **12.**

The dual fuel burner **10** may be supplied with biofuel and air drawn through a combustion supply fan **9.** In some examples, combustion supply fan **9** draws ambient-temperature and/or pre-heated air **38** from the atmosphere and the reduced-temperature diverted portion of cleaned drying gas stream exiting condenser **14.** In some embodiments of treatment system **100,** a fuel venturi **19** may include a venturi valve arranged to further mix the ambient-temperature and/or pre-heated air **38** and the reduced-temperature diverted portion of cleaned drying gas stream exiting condenser **14** from primary air supply inlet **20** with biofuel from biofuel bin **6.** Primary air supply inlet **20** may include an air-air heat exchanger system (not shown) to preheat the air being used with the biofuel, as well as a filter and grill fitted with an integral adjustable baffle (not shown) to control downstream pressure and minimize dust drawn to dual fuel burner **10.** The combustion supply fan **9** may include a dust handling fan and may supply the dual fuel burner **10** with the mix of ambient temperature and preheated air, and biofuel. In some examples, combustion supply fan **9** may include a variable speed drive to control the airflow to dual fuel burner **10** or, alternately, ambient-temperature or preheated air from the primary air supply inlet **20** may provide all of the air to the dual fuel burner **10.**

In some examples, the weight of ambient-temperature or preheated air (i.e. new air) that enters dual fuel burner **10** through primary air supply inlet **20** may be equal to approximately three to ten times that the weight of air from diverter valve **17** entering dual fuel burner **10.**

Treatment system **100** may further include ash separator **22** for receiving the combusted air exiting from the system boiler **11.** The received combusted air may include ash along with some residual moisture from system boiler **11.** Ash separator **22** may be used to remove ash from the combusted air exiting from system boiler **11** and deposit the removed ash in ash storage bin **21** or ash storage **23.** In some examples, ash separator **22** may include a Stairmand-type high-efficiency cyclone or a fabric-type separator to clean the gas received from system boiler **11.** Specifically, one or more separators, each made from temperature and corrosion-resistant materials (e.g., stainless steel), may be used to separate the particles from the combusted air exiting from system boiler **11** and may discharge the solids to ash storage bin **21** or ash storage **23.** The cleaned combusted air exiting ash separator **22** may then be sent to terminal air pollution control scrubber **24.** While the above examples were described using Stairmand-type cyclones, other cyclone separators, a baghouse, or other gas solids separators capable of functioning effectively and safely in the operating temperatures may be used to clean the combusted air exhaust from the system boiler **11.** It should be appreciated that the air pollution control scrubber may have additional functions depending on applicable air quality standards.

The cleaned combusted air exiting ash separator **22** can be directed to terminal air pollution control scrubber **24.** Terminal air pollution control scrubber **24** may be of a type similar or identical to condensing-type scrubber **7** and may be used to condense moisture out of the cleaned combusted air received from ash separator **22.** For instance, terminal air pollution control scrubber **24** may direct the cleaned combusted air received from ash separator **22** over a series of tubes that are cooled by the flow of water from an ambient-temperature water source, causing the gas temperature to drop below its dew point. As the moisture condenses into water at air pollution control scrubber **24,** it may collect carry-over particulate remaining in the gas stream and carry the particulate as sludge condensate which is to be removed from the system and conveyed to the treatment plant headworks or other disposal site (not shown).

Treatment system **100** may further include a terminal fan **43** for drawing the cleaned combusted air through the ash separator **22** and air pollution control scrubber **24.** The output of terminal fan **43** may be discharged from the system through the discharge stack **34** after the air pollution control scrubber **24** and then to the atmosphere.

In some examples, the weight of gas that enters treatment system **100** from the atmosphere through primary air supply inlet **20** may be equal to the weight of gas that is removed from the system though the discharge stack **34** to the atmosphere. As a result, a constant weight of gas circulating through the system may be maintained.

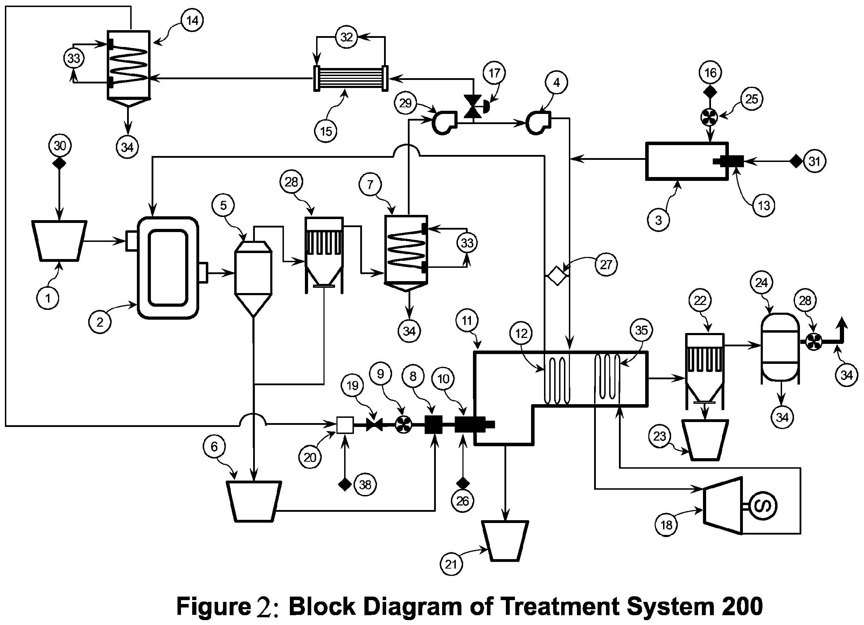

**Figure 2** illustrates a block diagram of another exemplary treatment system **200.** Treatment system **200** is similar to treatment system **100,** with the differences discussed in greater detail below. Reference numbers for components of treatment system **200** that are the same as those used for components in treatment system **100** indicate that a similar component may be used in treatment system **200.**

Treatment system **200** may be utilized when a supply of digester gas is available to preheat make-up air supply **16.** In treatment system **200,** dryer heater **3** is added to the system described in treatment system **100** and is the primary source of heat for the drying gas stream. As a result, in treatment system **200,** heat conveyed to the drying gas stream from the air-air boiler heat exchanger **12,** located within system boiler **11** is minimized and the heat directed to the turbine air-water heat exchanger **35** is maximized. With more heat supplied to the steam system/turbine **18,** the production of power is increased in comparison to treatment system **100.**

It should be appreciated that, as with treatment system **100,** the operating temperature of the drying gas at Dryer **2** in treatment system **200** may vary depending on the specific sludge application. Increasing the temperature of the drying gas stream in Dryer **2** enables increased moisture pickup per unit weight of sludge **30.** As a result, the throughput of Dryer **2** for dewatered sludge of any particular moisture content may be increased in proportion to heat input to the Dryer **2.** The drying gas stream can be at a temperature between 315°C (600°F) and 815°C (1,500°F). Sources of heat for drying gas stream coming to Dryer **2** may include an air-air boiler heat exchanger unit **12** within system boiler **11** that will supplement heat produced from digester gas **31** combusted in digester gas burner **13.**

In dyer heater **3,** digester gas **31** combusted in digester gas burner **13** preheats make-up air supply **16.** The make-up air supply **16** may include air supply fan **25** to assist the air flow into dryer heater **3.** Preheated make-up air supply **16** is then injected into the drying gas loop. It should be appreciated that preheated make-up air supply **16** may be injected into the drying gas loop either before or after air-air boiler heat exchanger unit **12** within system boiler **11.**

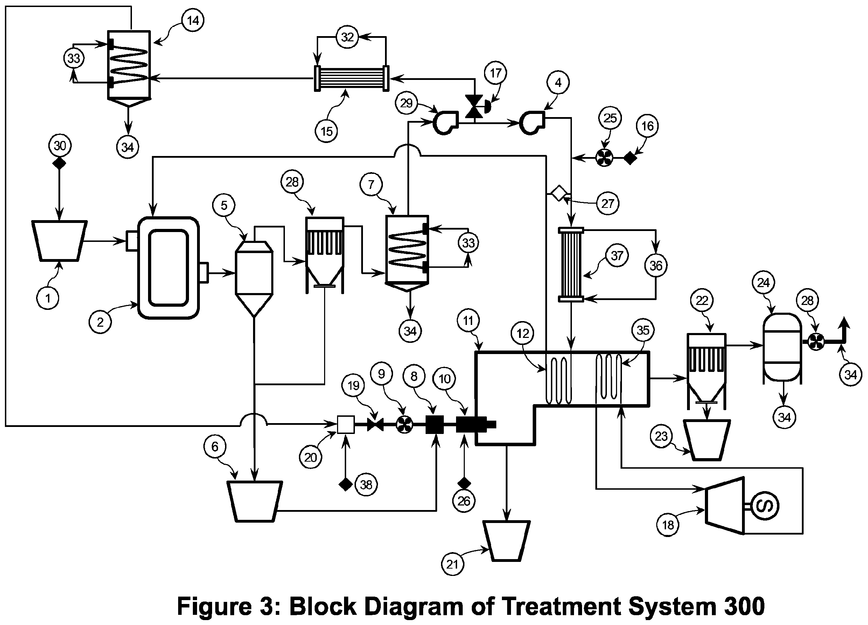

**Figure 3** illustrates a block diagram of another exemplary treatment system **300.** Treatment system **300** may be similar to treatment system **100,** with the differences discussed in greater detail below. Reference numbers for components of treatment system **300** that are the same as those used for components in treatment system **100** indicate that a similar component may be used in treatment system **300.**

Treatment system **300** may be utilized when a supply of high temperature exhaust air from power generation equipment (not shown) is available to support Dryer **2.** In treatment system **300,** air-air heat exchanger **37** is added to the system described in treatment system **100** to preheat the portion of cleaned drying gas going to air-air boiler heat exchanger **12** that was not drawn through diverter valve **17** and not divert by mixer **39** by transferring heat from the high-temperature power generation equipment exhaust system to the now cleaned drying gas stream. As a result, in treatment system **300,** because drying gas conveyed to air-air boiler heat exchanger **12,** located within system boiler **11** has been preheated using high temperature power generation equipment exhaust air via air-air heat exchanger **37** heat available for turbine air-water heat exchanger **35** is maximized. With more heat supplied to the steam system/turbine **18,** the production of power is increased in comparison to treatment system **100.**

Treatment system **300** is based on treatment system **100** with the addition of exhaust air manifold line **36** that runs from power generation equipment (not shown) and delivers heated power generation equipment exhaust air to the air-air heat exchanger **37,** to preheat the recirculating drying gas in advance of air-air boiler heat exchanger **12.** After passing through the air-air heat exchanger **37,** the exhaust air manifold line **36** delivers the reduced temperature power generation equipment exhaust air to the appropriate power generation air pollution control equipment (not shown) before it is released to the atmosphere.

It should be appreciated that in addition to the described exemplary systems **100, 200,** and **300** described, additional systems are possible including variations and combinations of the elements and systems provided. For example, certain elements may be optionally removed or replaced, additional elements may be included, and certain elements described with respect to one system may be advantageously used in other systems described. For example, condensing-type scrubber **7** may be removed or additional mixers **39** may be added.

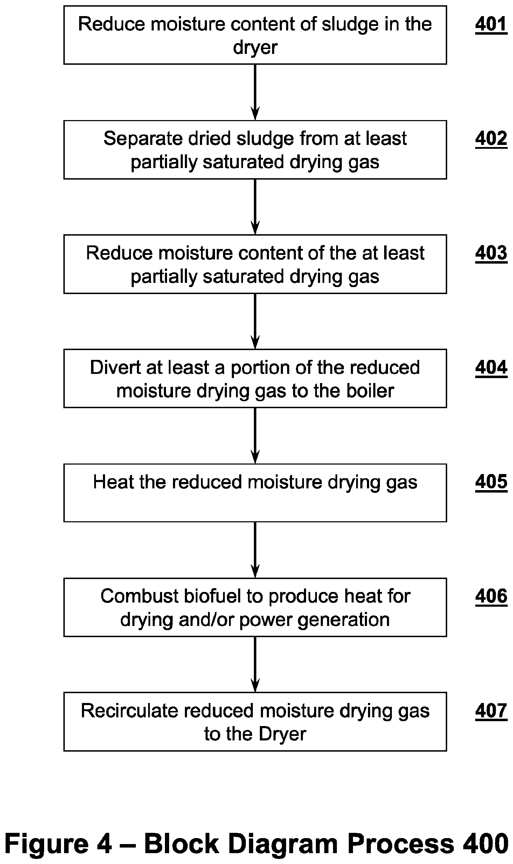

**Figure 4** illustrates an exemplary process **400** for transforming sludge into energy. In some examples, process **400** can be performed using a treatment system similar or identical to treatment system **100, 200** or **300.**

At block **401,** moisture content of dewatered sludge may be reduced to form at least partially saturated drying gas and biofuel with a moisture content of less than 30 percent. In some examples, this may be done using Dryer **2** as described above. For instance, dewatered sludge may be broken up in the presence of drying gas to form a powder having a moisture content of less than about 30 percent. The drying gas may absorb at least a portion of the moisture contained in the dewatered sludge. In some examples, the dewatered sludge may be heated at Dryer **2,** using, for example, drying gas received from dryer heater **3** and/or air-air boiler heat exchanger unit **12** via process-air circulation fan **4** and/or process fan **29.**

At block **402,** the biofuel may be separated from the at least partially saturated drying gas generated at block **401.** In some examples, this may be done using gas-solids separators **5** and **28** as described above. For instance, gas-solids separators **5** and **28** may be operable to separate the biofuel from the at least partially saturated drying gas generated by Dryer **2** and deposit the separated biofuel into biofuel bin **6.** In some examples, gas-solids separator **5** may be a cellular type separator and may include one or more Stairmand-type cyclones or other satisfactory equipment to clean the received at least partially saturated gas.

At block **403,** the moisture content of the at least partially saturated drying gas may be reduced by reducing the temperature of the at least partially saturated drying gas to below its dew point to form a reduced-moisture gas (i.e., cleaned drying gas) and hot water. In some examples, the moisture content of the at least partially saturated drying gas is reduced using condensing-type scrubber **7** to form cleaned drying gas as described above. For instance, the at least partially saturated gas may be passed through a series of tubes that are cooled by ambient-temperature water received from an outside source. As the at least partially saturated drying gas cools below the dew point of the gas moisture, a portion of the moisture condenses out of the gas. As the moisture condenses into water, it may collect carry-over particulate remaining from the drying gas stream and carry the particulate to the treatment plant or other out-of-system treatment **34.**

At block **404** a portion of the reduced-moisture drying gas generated at block **403** may be diverted to compensate for moisture contained in sludge entering the system 30. The moisture content of the diverted drying gas stream may be reduced at condenser **14.** The reduced-moisture diverted gas stream (i.e., reduced-temperature diverted portion of cleaned drying gas stream described above) is then conveyed to the primary air inlet **20** where it is combined with ambient-temperature and/or pre-heated air **38** to be the oxygen source for the fuel burner **10.**

At block **405,** heating of the reduced-moisture drying gas generated at block **403** may be accomplished in air-air boiler heat exchanger **12** in system boiler **11.** In some examples, based on treatment system **200,** the reduced-moisture drying gas is also heated in dryer heater **3** with heat produced by combusting digester gas **31** in digester gas burner 13. In some examples, based on treatment system **300,** the reduced-moisture drying gas is preheated using power generation equipment exhaust gas via air-air boiler heat exchanger **37** before it is heated via air-air boiler heat exchanger **12** in the system boiler **11.**

At block **406,** biofuel is combusted in system boiler **11** and produces heat for the drying gas that is utilized in Dryer **2** and heats the steam circulating through air-water heat exchanger **35** that powers steam system/turbine **18.**

At block **407,** the reduced-moisture drying gas is then recirculated to Dryer **2** to reduce the moisture content of the sludge **30.**

It should be appreciated that while the blocks of process **400** are provided in a particular order, the blocks can be performed in other orders, and some processes may be carried out partially or fully in parallel. Further, process **400** can include all or a portion of the blocks listed above.

Those skilled in the art will recognize that the operations of some variations may be implemented using hardware, software, firmware, or combinations thereof, as appropriate. For example, some processes can be carried out using processors or other digital circuitry under the control of software, firmware, or hard-wired logic. (The term "logic" herein refers to fixed hardware, programmable logic and/or an appropriate combination thereof, as would be recognized by one skilled in the art, to carry out the recited functions.) Software and firmware can be stored on computer-readable storage media. Some other processes can be implemented using analog circuitry, as is well known to one of ordinary skill in the art. Additionally, memory or other storage, as well as communication components, may be employed in embodiments of the apparatus and methods described herein.

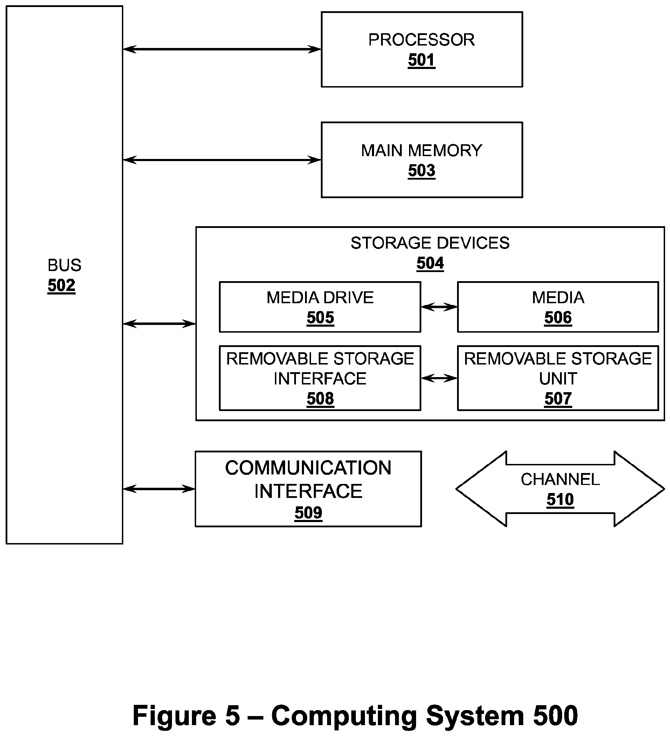

**Figure 5** illustrates a typical computing system **500** that may be employed to carry out processing functionality in some variations of the process. For instance, computer system **500** may be used to control one or more elements of the exemplary treatment systems described above. Those skilled in the relevant art will also recognize how to implement the apparatus and methods described herein using other computer systems or architectures. Computing system **500** may represent, for example, a desktop, laptop, or notebook computer, hand-held computing device (PDA, mobile phone, tablet, etc.), mainframe, supercomputer, server, client, or any other type of special or general purpose computing device as may be desirable or appropriate for a given application or environment. Computing system **500** can include one or more processors, such as a processor **501.** Processor **501** can be implemented using a general or special purpose processing engine such as, for example, a programmable logic controller, a microprocessor, controller, or other control logic. In this example, processor **501** is connected to a bus **502** or other communication medium.

Computing system **500** can also include a main memory **503,** preferably random access memory (RAM) or other dynamic memory, for storing information and instructions to be executed by processor **501.** Main memory **503** also may be used for storing temporary variables or other intermediate information during execution of instructions to be executed by processor **501.** Computing system **500** may likewise include a read-only memory or other static storage device coupled to bus **502** for storing static information and instructions for processor **501.**

The computing system **500** may also include information storage Devices **504,** which may include, for example, a media drive **505.** The media drive **505** may include a drive or other mechanism to support fixed or removable storage media, such as a hard disk drive, a floppy disk drive, a USB flash drive, an optical disk drive, a CD or DVD drive (R or RW), or other removable or fixed media drive. Storage media **506** may include, for example, a hard disk, floppy disk, optical disk, CD or DVD, or other fixed or removable medium that is read by and written to media drive **505.** As these examples illustrate, the storage media **506** may include a computer-readable storage medium having stored there in particular computer software or data.

In some variations, information storage Devices **504** may include other similar instrumentalities for allowing computer programs or other instructions or data to be loaded into computing system **500.** Such instrumentalities may include, for example, a removable storage unit **507** and an interface **508,** such as a program cartridge and cartridge interface, a removable memory (for example, a flash memory or other removable memory module) and memory slot, and other removable storage units **507** and interfaces **508** that allow software and data to be transferred to computing system **500.**

In some variations, computing system **500** can also include a communications interface **509.** Communications interface **509** can be used to allow software and data to be transferred between computing system **500** and external devices. Non-limiting examples of communications interface **509** can include a modem, a network interface (such as an Ethernet or other NIC card), a communications port (such as for example, a USB port), a PCMCIA slot and card, a PCI interface, etc. Software and data transferred via communications interface **509** are in the form of signals which can be electronic, electromagnetic, optical, or other signals capable of being received by communications interface **509.** These signals are provided to communications interface **509** via a channel **510.** This channel **510** may carry signals (*e.g*., signals to and from sensors or controllers) and may be implemented using a wireless medium, wire or cable, fiber optics, or other communications medium. Some examples of a channel include a phone line, a cellular phone link, an RF link, a network interface, a local or wide area network, and other communications channels.

The terms "computer program product" and "computer-readable storage medium" may be used generally to refer to non-transitory storage media, such as, for example, main memory **503** and storage devices **504.** These and other forms of computer-readable storage media may be involved in providing one or more sequences of one or more instructions to processor **501** for execution. Such instructions, generally referred to as "computer program code" (which may be grouped in the form of computer programs or other groupings), when executed, enable the computing system **500** to perform features or functions of embodiments of the apparatus and methods, described herein.

In some variations where the elements are implemented using software, the software may be stored in a computer-readable storage medium and loaded into computing system **500** using, for example, removable storage drive **507** or communications interface **509.** The control logic (in this example, software instructions or computer program code), when executed by the processor **501,** causes the processor **501** to perform the functions of the apparatus and methods, described herein.

It will be appreciated that, for clarity purposes, the above description has described embodiments of the apparatus and methods described herein with reference to different functional units and processors. However, it will be apparent that any suitable distribution of functionality between different functional units, processors, or domains may be used without detracting from the apparatus and methods described herein. For example, functionality illustrated to be performed by separate processors or controllers may be performed by the same processor or controller. Hence, references to specific functional units are only to be seen as references to suitable means for providing the described functionality, rather than as indicative of a strict logical or physical structure or organization.

While specific components and configurations are provided above, it will be appreciated by one of ordinary skill in the art that other components variations may be used. Additionally, although a feature may appear to be described in connection with a particular embodiment, one skilled in the art would recognize that various features of the described embodiments may be combined. Moreover, aspects described in connection with an embodiment may stand alone.

Furthermore, although individually listed, a plurality of means, elements, or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

## Claims

1. A treatment system for generating electricity by combusting biofuel produced from dewatered sludge, the system comprising: a turbine (18); a dryer (2) operable to:
receive a drying gas;
receive sludge (30); and
reduce the moisture content of the sludge in the presence of the drying gas, wherein the drying gas absorbs at least a portion of the moisture content of the sludge and forms a biofuel, reduced moisture powder, and at least partially saturated gas;
a boiler system (11) comprising a dual fuel burner (10) and a primary air supply inlet (20), said boiler operable to combust the biofuel to produce at least one of heat for use in the dryer (2) or steam for the turbine (18); a first separator (5) located downstream of the dryer (2) operable to separate the biofuel from the at least partially saturated gas;
a first condenser (7) located downstream of the separator (5) operable to reduce a moisture content of the at least partially saturated gas by reducing a temperature of the at least partially saturated gas to form a reduced-moisture gas;
at least one fan (29) located downstream of the condenser (7) operable to direct the reduced-moisture gas to a heat exchanger (12) to form the drying gas, the heat exchanger disposed in the boiler system and to direct the reduced-moisture gas to the dryer to reduce the moisture content of the sludge;
a diverter valve (17) located downstream of the fan (29) operable to keep an overall system moisture balance by removing the volume of reduced-moisture gas out of the system that is equivalent to the volume of moisture removed from the sludge less the amount removed by first condenser (7);
a gas-water heat exchanger (15) located downstream of the diverter valve (17) for cooling the reduced-moisture gas diverted out by the diverter valve (17) by using process water from an ambient-temperature water source (32) and a condenser (14) located downstream of the gas-water heat exchanger(15) for condensing out a volume of moisture equal to the moisture contained in the sludge less the amount removed by the first condenser (7) from the diverted reduced-moisture gas volume, to form a reduced temperature diverted portion of cleaned drying gas;
said boiler system (11) comprising the primary air supply inlet (20) operable to receive the reduced temperature diverted portion of cleaned drying gas as combustion air being combusted with the biofuel utilizing the dual fuel burner (16);
a make-up air supply (16) located downstream of the fan (29) to replace reduced-moisture gas diverted out of the system; and
a series of heat exchangers (12, 35) incorporated into the boiler system to transfer heat to at least one of the turbine (18) and dryer (2).

2. The system of claim 1, wherein the sludge comprises at least one or a combination of digested sludge, undigested sludge, fresh animal waste, aged animal waste, agricultural waste, or food waste.

3. The system of claim 1, further comprising a mixer (27) operable to mix a portion of reduced-moisture gas with gas heated by the boiler to form the drying gas.

4. The system of claim 3, wherein the boiler system comprises the burner (10) operable to burn a mixture of at least one of ambient and pre-heated air and at least a portion of the dried powder.

5. The system of claim 4, wherein the burner (10) is further operable to burn a gas or oil.

6. The system of claim 1, further comprising a heater (3) having a gas burner (13), the heater operable to further heat the drying gas heated by the boiler system.

7. The system of claim 1, wherein the reduced-moisture gas is preheated using heat from combusted gas before it is heated in the boiler system.

8. A method for producing electricity from dewatered sludge in a treatment system according to claim 1, the method comprising:
reducing moisture content of a dewatered sludge in a dryer (2) by breaking the dewatered sludge into biofuel in the presence of a drying gas, wherein the drying gas absorbs at least a portion of the moisture content of the dewatered sludge to form at least partially saturated gas;
combusting the biofuel to produce at least one of a drying gas for use in the drying process and steam for use in a turbine (18);
separating the biofuel from the at least partially saturated gas;
reducing a moisture content of the at least partially saturated gas by reducing a temperature of the at least partially saturated gas to below its dew point in order to form a reduced-moisture gas;
heating a portion of the reduced-moisture gas to generate the drying gas; and
recirculating at least a portion of the drying gas by directing it to the dryer, wherein upon exiting the dryer it becomes partially saturated gas.

9. The method of claim 8, wherein the steam exiting the turbine is preheated using heat from power generation equipment exhaust prior to being heated in the boiler system.

10. The method of claim 8, wherein a duel fuel burner of a boiler system is used to combust the fuel and the boiler system heats the drying gas.

11. The method of claim 10, wherein the drying gas is heated by at least one of a heater burning gas, power generation equipment exhaust gas, and a system boiler.

12. The method of claim 8, wherein reducing the moisture content of the at least partially saturated gas is performed using a condenser operable to receive water at a first temperature and output the water at a second temperature higher than the first temperature, and wherein the water reduces the temperature of the at least partially saturated gas.

13. The method of claim 8, wherein combusting the fuel produces combusted gas having ash and a moisture content, and further comprising:
reducing the moisture content of the combusted gas using a condenser, the condenser operable to receive water at a first temperature and output the water at a second temperature higher than the first temperature, and wherein the water reduces the temperature of the combusted gas;
discharging the reduced moisture combusted gas; and
separating the ash from the combusted gas.

## Patentansprüche

1. Behandlungssystem zur Energiegewinnung durch Verbrennung von Biobrennstoff, hergestellt aus entwässertem Schlamm, wobei das System umfasst:
eine Turbine (18);
einen Trockner (2), der betreibbar ist, um:
ein Trocknungsgas zu empfangen;
einen Schlamm (30) zu empfangen; und
den Feuchtigkeitsgehalt des Schlammes in Gegenwart des Trocknungsgases zu reduzieren, wobei das Trocknungsgas zumindest einen Teil des Feuchtigkeitsgehalts des Schlamms aufnimmt und einen Biobrennstoff, ein Pulver mit reduzierter Feuchtigkeit und zumindest teilweise gesättigtes Gas bildet;
ein Kesselsystem (11), das einen dualen Brennstoffbrenner (10) und einen Primärluftzufuhreinlass (20) umfasst, wobei der Kessel betreibbar ist, um den Biobrennstoff zu verbrennen, um mindestens eines von Wärme zur Verwendung im Trockner (2) oder Dampf für die Turbine (18) herzustellen;
einen ersten Separator (5), der stromabwärts des Trockners (2) angeordnet ist, der betreibbar ist, um den Biobrennstoff von dem zumindest teilweise gesättigten Gas zu trennen;
einen ersten Kondensator (7), der stromabwärts des Separators (5) angeordnet ist, der betreibbar ist, um einen Feuchtigkeitsgehalt des zumindest teilweise gesättigten Gases durch Reduzieren einer Temperatur des zumindest teilweise gesättigten Gases zu reduzieren, um ein Gas mit reduzierter Feuchtigkeit zu bilden;
mindestens ein stromabwärts des Kondensators (7) angeordnetes Gebläse (29), das betreibbar ist, um das Gas mit reduzierter Feuchtigkeit zu einem Wärmetauscher (12) zu leiten, um das Trocknungsgas zu bilden, wobei der Wärmetauscher im Kesselsystem angeordnet ist, und das Gas mit reduzierter Feuchtigkeit zum Trockner zu leiten, um den Feuchtigkeitsgehalt des Schlamms zu reduzieren;
ein Umleitventil (17), das stromabwärts des Gebläses (29) angeordnet ist, das betreibbar ist, um eine Gesamtsystem-Feuchtigkeitsbilanz zu halten, indem das Gasvolumen mit reduzierter Feuchtigkeit aus dem System entfernt wird, das äquivalent zu dem Feuchtigkeitsvolumen ist, das aus dem Schlamm entfernt wurde, abzüglich der durch den ersten Kondensator (7) entfernten Menge;
einen Gas-Wasser-Wärmetauscher (15), der stromabwärts des Umleitventils (17) angeordnet ist, zum Kühlen des durch das Umleitventil (17) umgeleiteten Gases mit reduzierter Feuchtigkeit unter Verwendung von Prozesswasser aus einer Umgebungstemperatur-Wasserquelle (32) und einen Kondensator (14), der stromabwärts des Gas-Wasser-Wärmetauschers (15) angeordnet ist, zum Auskondensieren eines Feuchtigkeitsvolumens, das gleich der im Schlamm enthaltenen Feuchtigkeit ist, abzüglich der durch den ersten Kondensator (7) entfernten Menge, aus dem umgeleiteten Gasvolumen mit reduzierter Feuchtigkeit, um einen umgeleiteten Teil mit reduzierter Temperatur des gereinigten Trocknungsgases zu bilden;
wobei das Kesselsystem (11) umfasst:
den Primärluftzufuhreinlass (20), der betreibbar ist, um den umgeleiteten Teil mit reduzierter Temperatur des gereinigten Trocknungsgases als Verbrennungsluft, die mit dem Biobrennstoff unter Verwendung des dualen Brennstoffbrenners (16) verbrannt wird, zu empfangen;
eine Frischluftzufuhr (16), die stromabwärts des Gebläses (29) angeordnet ist, um von dem System umgeleitetes Gas mit reduzierter Feuchtigkeit zu ersetzen; und
eine Reihe von Wärmetauschern (12 35), die in das Kesselsystem eingebaut sind, um Wärme an mindestens eines von der Turbine (18) und den Trockner (2) zu übertragen.

2. System nach Anspruch 1, wobei der Schlamm mindestens eines oder eine Kombination von ausgefaultem Schlamm, unausgefaultem Schlamm, frischem Tierabfall, gealtertem Tierabfall, landwirtschaftlichen Abfall oder Lebensmittelabfall umfasst.

3. System nach Anspruch 1, ferner umfassend einen Mischer (27), der betreibbar ist, um einen Teil von Gas mit reduzierter Feuchtigkeit mit durch den Kessel erwärmtem Gas zu mischen, um das Trocknungsgas zu bilden.

4. System nach Anspruch 3, wobei das Kesselsystem den Brenner (10) umfasst, der betreibbar ist, um eine Mischung aus mindestens einer von Umgebungs- und vorgewärmter Luft und mindestens einem Teil des getrockneten Pulvers zu brennen.

5. System nach Anspruch 4, wobei der Brenner (10) ferner betreibbar ist, um ein Gas oder Öl zu brennen.

6. System nach Anspruch 1, ferner umfassend eine Heizeinrichtung (3) mit einem Gasbrenner (13), wobei die Heizeinrichtung betreibbar ist, um das durch das Kesselsystem erwärmte Trocknungsgas weiter zu erwärmen.

7. System nach Anspruch 1, wobei das Gas mit Gas mit reduzierter Feuchtigkeit unter Verwendung von Wärme aus verbranntem Gas vorgewärmt wird, bevor es im Kesselsystem erwärmt wird.

8. Verfahren zur Energiegewinnung aus entwässertem Schlamm in einem Behandlungssystem nach Anspruch 1, wobei das Verfahren umfasst:
Reduzieren des Feuchtigkeitsgehalts eines entwässerten Schlamms in einem Trockner (2) durch Aufbrechen des entwässerten Schlamms in Biobrennstoff in Gegenwart eines Trocknungsgases, wobei das Trocknungsgas zumindest einen Teil des Feuchtigkeitsgehalts des entwässerten Schlamms absorbiert, um ein zumindest teilweise gesättigtes Gas zu bilden;
Verbrennen des Biobrennstoffs, um mindestens eines von einem Trocknungsgas zur Verwendung im Trocknungsprozess und Dampf zur Verwendung in einer Turbine (18) zu erzeugen;
Trennen des Biobrennstoffs von dem zumindest teilweise gesättigten Gas; Reduzieren eines Feuchtigkeitsgehalts des zumindest teilweise gesättigten Gases durch Reduzieren einer Temperatur des zumindest teilweise gesättigten Gases auf unter dessen Taupunkt, um ein Gas mit reduzierter Feuchtigkeit zu bilden;
Erwärmen eines Teils des Gases mit reduzierter Feuchtigkeit, um das Trocknungsgas zu erzeugen; und
Rezirkulation von mindestens einem Teil des Trocknungsgases, indem das Trocknungsgas zum Trockner geleitet wird, wobei es nach dem Austritt aus dem Trockner teilweise gesättigtes Gas wird.

9. Verfahren nach Anspruch 8, wobei der aus der Turbine austretende Dampf unter Verwendung von Wärme von Abgas der Energieerzeugungsausrüstung vorgewärmt wird, bevor es im Kesselsystem erwärmt wird.

10. System nach Anspruch 8, wobei ein dualer Brennstoffbrenner eines Kesselsystems verwendet wird, um den Brennstoff zu verbrennen und das Kesselsystem das Trocknungsgas erwärmt.

11. Verfahren nach Anspruch 10, wobei das Trocknungsgas durch mindestens eines von einem Heizgas, Abgas der Energieerzeugungsausrüstung und einem Systemkessel erwärmt wird.

12. Verfahren nach Anspruch 8, wobei das Reduzieren des Feuchtigkeitsgehalts des zumindest teilweise gesättigten Gases unter Verwendung eines Kondensators durchgeführt wird, der betreibbar ist, um Wasser bei einer ersten Temperatur zu empfangen und das Wasser bei einer zweiten Temperatur, die höher als die erste Temperatur ist, auszugeben, und wobei das Wasser die Temperatur des zumindest teilweise gesättigten Gases reduziert.

13. Verfahren nach Anspruch 8, wobei das Verbrennen des Brennstoffs verbranntes Gas erzeugt, das Asche und einen Feuchtigkeitsgehalt aufweist, und ferner umfasst:
Reduzieren des Feuchtigkeitsgehalts des verbrannten Gases unter Verwendung eines Kondensators, wobei der Kondensator betreibbar ist, um Wasser bei einer ersten Temperatur zu empfangen und das Wasser bei einer zweiten Temperatur, die höher als die erste Temperatur ist, auszugeben, und wobei das Wasser die Temperatur des verbrannten Gases reduziert;
Ableitung des verbrannten Gases mit reduzierter Feuchtigkeit; und
Trennen der Asche vom verbrannten Gas.

## Revendications

1. Système de traitement pour générer de l'électricité par la combustion de biocarburant produit à partir de boues déshydratées, le système comprenant :
une turbine (18) ;
un séchoir (2) pouvant fonctionner pour :
recevoir un gaz de séchage ;
recevoir des boues (30) ; et
réduire la teneur en humidité des boues en présence du gaz de séchage, dans lequel le gaz de séchage absorbe au moins une partie de la teneur en humidité des boues et forme un biocarburant, une poudre d'humidité réduite et un gaz au moins partiellement saturé ;
un système de chaudière (11) comprenant un brûleur à combustible duel (10) et une entrée d'alimentation en air primaire (20), ledit brûleur pouvant fonctionner pour brûler le biocarburant pour produire au moins l'une d'une chaleur à utiliser dans le séchoir (2) ou d'une vapeur pour la turbine (18) ;
un premier séparateur (5) situé en aval du séchoir (2) pouvant fonctionner pour séparer le biocarburant du gaz au moins partiellement saturé ;
un premier condenseur (7) situé en aval du séparateur (5) et pouvant fonctionner pour réduire une teneur en humidité du gaz au moins partiellement saturé en réduisant une température du gaz au moins partiellement saturé pour former un gaz à humidité réduite ;
au moins un ventilateur (29) situé en aval du condenseur (7) et pouvant fonctionner pour diriger le gaz à humidité réduite vers un échangeur de chaleur (12) pour former le gaz de séchage, l'échangeur de chaleur étant disposé dans le système de chaudière, et pour diriger le gaz à humidité réduite vers le séchoir pour réduire la teneur en humidité des boues ;
une vanne de dérivation (17) situé en aval du ventilateur (29) et pouvant fonctionner pour maintenir un équilibre global d'humidité du système en éliminant le volume de gaz à humidité réduite du système qui est équivalent au volume d'humidité retiré des boues moins la quantité retirée par le premier condenseur (7) ;
un échangeur de chaleur d'eau-gaz (15) situé en aval de la vanne de dérivation (17) et destiné à refroidir le gaz à humidité réduite dérivé par la vanne de dérivation (17) en utilisant de l'eau de traitement provenant d'une source d'eau à la température ambiante (32) et un condenseur (14) situé en aval de l'échangeur de chaleur d'eau-gaz (15) et destiné à condenser un volume d'humidité qui est égal à l'humidité contenue dans les boues moins la quantité retirée par le premier condenseur (7) du volume de gaz à humidité réduite dérivé, pour former une partie dérivée de gaz de séchage nettoyé à température réduite ;
ledit système de chaudière (11) comprenant :
l'entrée d'alimentation en air primaire (20) pouvant fonctionner pour recevoir la partie dérivée de gaz de séchage nettoyé à température réduite en tant qu'air de combustion étant brûle avec le biocarburant en utilisant le brûleur à combustible duel (16) ;
une alimentation en air de remplacement (16) située en aval du ventilateur (29) et destinée à remplacer du gaz à humidité réduite dérivé du système ; et
une série d'échangeurs de chaleur (12, 35) incorporés dans le système de chaudière pour transférer de la chaleur vers au moins l'un de la turbine (18) et du séchoir (2).

2. Système selon la revendication 1, dans lequel les boues comprennent au moins l'une ou une combinaison de boues digérées, de boues non digérées, de déchets d'animaux frais, de déchets d'animaux vieillis, de déchets agricoles ou de déchets alimentaires.

3. Système selon la revendication 1, comprenant en outre un mélangeur (27) pouvant fonctionner pour mélanger une partie de gaz à humidité réduite avec du gaz chauffé par la chaudière pour former le gaz de séchage.

4. Système selon la revendication 3, dans lequel le système de chaudière comprend le brûleur (10) pouvant fonctionner pour brûler un mélange d'au moins un air ambiant et préchauffé et au moins une partie de la poudre séchée.

5. Système selon la revendication 4, dans lequel le brûleur (10) peut en outre fonctionner pour brûler un gaz ou un mazout.

6. Système selon la revendication 1, comprenant en outre un réchauffeur (3) ayant un brûleur à gaz (13), le réchauffeur pouvant fonctionner pour chauffer davantage le gaz de séchage chauffé par le système de chaudière.

7. Système selon la revendication 1, dans lequel le gaz à humidité réduite est préchauffé en utilisant la chaleur du gaz brûlé avant d'être chauffé dans le système de chaudière.

8. Procédé de production d'électricité à partir de boues déshydratées dans un système de traitement selon la revendication 1, le procédé comprenant les étapes consistant à :
réduire la teneur en humidité de boues déshydratées dans un séchoir (2) en brisant les boues déshydratées en biocarburant en présence d'un gaz de séchage, le gaz de séchage absorbant au moins une partie de la teneur en humidité des boues déshydratées pour former un gaz au moins partiellement saturé ;
brûler le biocarburant pour produire au moins l'un d'un gaz de séchage à utiliser dans le processus de séchage et d'une vapeur à utiliser dans une turbine (18);
séparer le biocarburant du gaz au moins partiellement saturé ;
réduire une teneur en humidité du gaz au moins partiellement saturé en réduisant une température du gaz au moins partiellement saturé en dessous de son point de rosée afin de former un gaz à humidité réduite ;
chauffer une partie du gaz à humidité réduite pour générer le gaz de séchage ; et
faire recirculer au moins une partie du gaz de séchage en le dirigeant vers le séchoir, et ensuite, à la sortie du séchoir, il devient du gaz partiellement saturé.

9. Procédé selon la revendication 8, dans lequel la vapeur sortant de la turbine est préchauffée en utilisant la chaleur de l'échappement de l'équipement de production d'électricité avant d'être chauffée dans le système de chaudière.

10. Procédé selon la revendication 8, dans lequel un brûleur à combustible duel d'un système de chaudière est utilisé pour brûler le combustible, et le système de chaudière chauffe le gaz de séchage.

11. Procédé selon la revendication 10, dans lequel le gaz de séchage est chauffé par au moins l'un d'un réchauffeur brûlant du gaz, d'un gaz d'échappement de l'équipement de production d'énergie et d'un système de chaudière.

12. Procédé selon la revendication 8, dans lequel la réduction de la teneur en humidité du gaz au moins partiellement saturé est effectuée en utilisant un condenseur pouvant fonctionner pour recevoir de l'eau à une première température et sortir l'eau à une deuxième température supérieure à la première température, et dans lequel l'eau réduit la température du gaz au moins partiellement saturé.

13. Procédé selon la revendication 8, dans lequel la combustion du carburant produit du gaz brûlé ayant des cendres et une teneur en humidité, et comprenant en outre :
la réduction de la teneur en humidité du gaz brûlé en utilisant un condenseur, le condenseur pouvant fonctionner pour recevoir de l'eau à une première température et sortir l'eau à une deuxième température supérieure à la première température, et l'eau réduisant la température du gaz brûlé ;
l'évacuation du gaz brûlé à humidité réduite ; et
la séparation des cendres du gaz brûlé.
